(19) Europäisches Patentamt
European Patent Office
Office européen des brevets

(11) **EP 4 481 670 B1**

(12) **EUROPEAN PATENT SPECIFICATION**

(45) Date of publication and mention
of the grant of the patent:
**25.02.2026 Bulletin 2026/09**

(21) Application number: **24177573.3**

(22) Date of filing: **23.05.2024**

(51) International Patent Classification (IPC):
***G06T 3/4038*** *(2024.01)*

(52) Cooperative Patent Classification (CPC):
**G06T 3/4038;** G06T 2200/32; G06T 2207/10024

(54) **IMAGE COMBINING METHOD, IMAGE COMBINING APPARATUS, AND COMPUTER-READABLE PROGRAM**

BILDKOMBINATIONSVERFAHREN, BILDKOMBINATIONSVORRICHTUNG UND COMPUTERLESBARES PROGRAMM

PROCÉDÉ DE COMBINAISON D'IMAGES, APPAREIL DE COMBINAISON D'IMAGES ET PROGRAMME LISIBLE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **21.06.2023 JP 2023101943**

(43) Date of publication of application:
**25.12.2024 Bulletin 2024/52**

(73) Proprietor: **SCREEN Holdings Co., Ltd.**
**Kyoto-shi, Kyoto 602-8585 (JP)**

(72) Inventor: **YASUDA, Takuya**
**Kyoto, 602-8585 (JP)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**CN-A- 111 738 925     CN-A- 115 205 118**

- KEHTARNAVAZ NASSER ET AL: "Real-Time Image and Video Processing: From Research to Reality", SYNTHESIS LECTURES ON IMAGE, VIDEO, AND MULTIMEDIA PROCESSING, vol. 2, no. 1, 1 January 2006 (2006-01-01), United States, pages 1 - 108, XP093206629, ISSN: 1559-8136, DOI: 10.2200/S00021ED1V01Y200604IVM005

Remarks:
The file contains technical information submitted after the application was filed and not included in this specification

## Description

### TECHNICAL FIELD

The present invention relates to a technique for combining a plurality of images.

### BACKGROUND ART

For imaging an object with high resolution or over a wide range, generally used is a method in which a target range is imaged a plurality of times, instead of being imaged in one time, so that image pickup regions can have an overlapping, and a plurality of images obtained thus are combined (synthesized). In Japanese Patent Application Laid Open Gazette No. 59-133665 and Japanese Patent Application Laid Open Gazette No. 62-140172, for example, weighting addition is applied to an overlapping region between two images in accordance with a distance from each image, to thereby suppress a boundary in a combined image from being outstanding.

In a case where a combined image consists of many images and has a large size, a highspeed operation close to real time is sometimes required. In such a case, there is a possible method in which a weighting factor for an overlapping region is determined in advance for each of all the images provided with overlapping regions and the images are collectively combined, to thereby increase the speed of the operation, but a high-capacity memory is needed to store all the weighting factors. In a case where the amount of data (number of bits) of the weighting factor is increased in order to improve the quality of the combined image, the capacity required for the memory is further increased.

CN 115 205 118 A discloses an image combining method for combining a plurality of images according to the preamble of claim 1.

### SUMMARY OF THE INVENTION

It is an object of the present invention to combine a plurality of picked-up images at high speed with saved memory.

A first aspect of the present invention is intended for an image combining method for combining a plurality of images according to claim 1.

According to the present invention, it is possible to combine a plurality of picked-up images at high speed with saved memory.

A second aspect of the present invention is intended for the image combining method according to the first aspect, in which when two or more weighting factors are specified for one overlapping pixel in the picked-up image, a weighted pixel value of the one overlapping pixel is obtained by multiplying a pixel value of the one overlapping pixel by a product of the two or more weighting factors in the operation d).

A third aspect of the present invention is intended for the image combining method according to the first or second aspect, in which in the operation e), a pixel value of each overlapping pixel in the combined image is obtained by dividing a sum of weighted pixel values at each overlapping pixel in the two or more picked-up images by a sum of factors by which pixel values at the overlapping pixel in the two or more picked-up images are multiplied for obtaining the weighted pixel values.

A fourth aspect of the present invention is intended for the image combining method according to any one of the first to third aspects, in which when the whole of one overlapping region overlaps another overlapping region, and when the one overlapping region has a predetermined size or less, the one overlapping region is excluded in the operation b).

A fifth aspect of the present invention is intended for an image combining apparatus for combining a plurality of images according to claim 5.

A sixth aspect of the present invention is intended for a computer-readable program according to claim 6.

These and other objects, features, aspects and advantages of the present invention will become more apparent from the following detailed description of the present invention when taken in conjunction with the accompanying drawings.

### BRIEF DESCRIPTION OF DRAWINGS

FIG. 1 is a block diagram showing a configuration of an image acquisition apparatus;
FIG. 2 is a view showing a configuration of a computer;
FIG. 3 is a view used for explaining a process of Comparative Example for combining a plurality of images;
FIG. 4 is a flowchart showing an operation flow for combining a plurality of images;

FIG. 5 is a view showing a plurality of picked-up images and overlapping regions;

FIG. 6 is a view used for explaining calculation of a weighted pixel value of an overlapping pixel;

FIG. 7 is a view showing a combined image generation region;

FIG. 8 is a view showing a combined image generation region and a factor accumulation region; and

FIG. 9 is a view showing a plurality of picked-up images.

## DESCRIPTION OF EMBODIMENTS

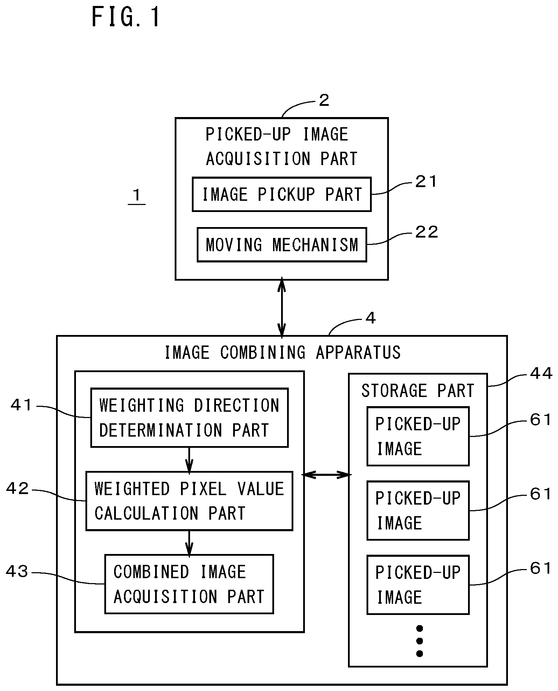

FIG. 1 is a block diagram showing a configuration of an image acquisition apparatus 1 in accordance with one preferred embodiment of the present invention. The image acquisition apparatus 1 is an apparatus for acquiring an image of an object. The object in the present preferred embodiment is, for example, a substrate such as a printed circuit board on which a pattern is formed, cells held in a container such as a petri dish, or the like. The image acquisition apparatus 1 includes a picked-up image acquisition part 2 and an image combining apparatus 4. As described later, the image combining apparatus 4 in the present preferred embodiment is implemented by a computer.

The picked-up image acquisition part 2 includes an image pickup part 21 and a moving mechanism 22. The image pickup part 21 has an image pickup device and the like and images an object. The moving mechanism 22 has a motor, a ball screw, and the like and moves the image pickup part 21 relatively to the object. An operation of imaging the object, which is performed by the picked-up image acquisition part 2, will be described later. An image (hereinafter, referred to as a "picked-up image") imaged by the picked-up image acquisition part 2 is outputted to the image combining apparatus 4. The picked-up image is typically a rectangular image.

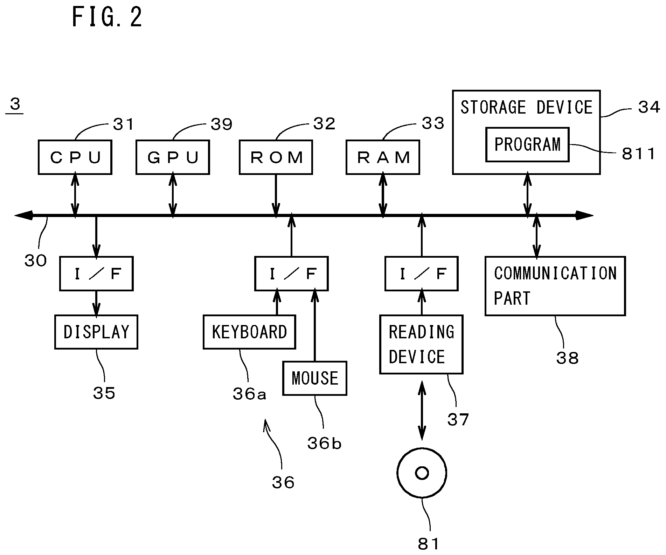

FIG. 2 is a view showing a configuration of a computer 3 which implements the image combining apparatus 4. The computer 3 has a configuration of a general computer system including a CPU 31, a ROM 32, a RAM 33, a storage device 34, a display 35, an input part 36, a reading device 37, a communication part 38, a GPU 39, and a bus 30. The CPU 31 performs various arithmetic operations. The GPU 39 performs various arithmetic operations on image processing or the like. The ROM 32 stores therein a basic program. The RAM 33 and the storage device 34 each store therein various information. The display 35 displays thereon various information such as an image or the like. The input part 36 includes a keyboard 36a and a mouse 36b for receiving an input from an operator. The reading device 37 reads information from a non-transitory computer-readable recording medium 81 such as an optical disk, a magnetic disk, a magneto-optic disk, a memory card, or the like. The communication part 38 transmits and receives a signal to/from the picked-up image acquisition part 2 and an external device. The bus 30 is a signal circuit for connecting the CPU 31, the GPU 39, the ROM 32, the RAM 33, the storage device 34, the display 35, the input part 36, the reading device 37, and the communication part 38 to one another.

In the computer 3, a program 811 is read out from the recording medium 81 through the reading device 37 in advance and stored into the storage device 34. The program 811 has only to be computer-readable, and may be stored into the storage device 34 via a network. The CPU 31 and the GPU 39 each perform an arithmetic operation while using the RAM 33 and the storage device 34 in accordance with the program 811. The CPU 31 and the GPU 39 each serve as an arithmetic operation part in the computer 3. Any constituent element other than the CPU 31 or the GPU 39 may be adopted to serve as the arithmetic operation part.

In the image combining apparatus 4, the computer 3 performs an arithmetic operation or the like in accordance with the program 811, to thereby implement the functional configuration shown in FIG. 1. In other words, the CPU 31, the GPU 39, the ROM 32, the RAM 33, the storage device 34, and peripheral constituents thereof in the computer 3 implement a weighting direction determination part 41, a weighted pixel value calculation part 42, a combined image acquisition part 43, and a storage part 44. Details of respective functions of the weighting direction determination part 41, the weighted pixel value calculation part 42, the combined image acquisition part 43, and the storage part 44 will be described later. All or part of these functions may be implemented by a dedicated electric circuit. Further, these functions may be implemented by a plurality of computers.

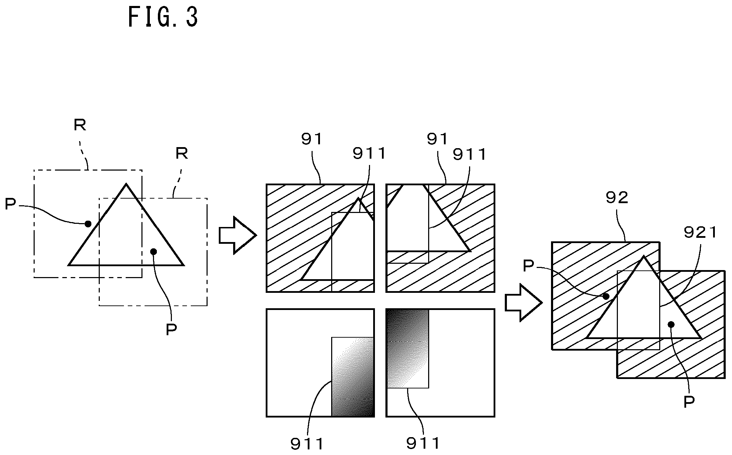

Herein, a process of Comparative Example for combining a plurality of images will be described with reference to FIG. 3. In the process of Comparative Example, as shown in the left side of FIG. 3, a plurality of image pickup positions P on the object are imaged by the image pickup part. In the left side of FIG. 3, an image pickup range R of the image pickup part for each image pickup position P is indicated by a rectangle of two-dot chain line. A plurality of picked-up images 91 shown on the upper stage in the center part of FIG. 3 are thereby acquired. Though only two picked-up images 91 are shown on the upper stage in the center part of FIG. 3, actually, many picked-up images 91 are acquired by imaging many image pickup positions P. At that time, in each combination of two picked-up images 91 corresponding to adj acent image pickup positions P, provided is an overlapping region 911 in which the picked-up images partially overlap each other.

In the process of Comparative Example, a range of the overlapping region 911 in each picked-up image 91 is known by a relative positional relation of the plurality of image pickup positions P. For each pixel included in the overlapping region 911 of the picked-up image 91, a weighting factor in a range of 0 to 1 is determined in advance and stored into the memory. As described earlier, since many picked-up images 91 are actually acquired, a high-capacity memory for storing a two-dimensional array of the weighting factors for the overlapping regions 911 in all the picked-up images 91 is prepared. Typically, the weighting factor for each overlapping region 911 gradually decreases toward an outer side of the picked-up image 91. On the lower stage of the center part of FIG. 3, the magnitude of the weighting factor set for each pixel in the overlapping region 911 is represented by shading (light and shade) of gray scale, and as the density becomes higher (black), the weighting factor becomes closer to 0, and as the density becomes lower (white), the weighting factor becomes closer to 1.

A pixel value of the pixel included in the overlapping region 911 of each picked-up image 91 is multiplied by a corresponding weighting factor. After that, in accordance with the relative positional relation of the plurality of image pickup positions P, the plurality of picked-up images 91 are arranged and a combined image 92 shown in the right side of FIG. 3 is acquired. At that time, in the combined image 92, to each pixel in a region 921 corresponding to the overlapping region 911, a sum of respective pixel values (each of which is a pixel value obtained by multiplying an original value by the weighting factor) of the pixels in two picked-up images 91 each provided with the overlapping region 911 is given, as a pixel value.

In the process of Comparative Example, even in the case where the combined image 92 consists of many picked-up images 91 and has a large size, it is possible to acquire the combined image 92 at high speed. On the other words, as described earlier, in the process of Comparative Example, a high-capacity memory for storing the two-dimensional array of the weighting factors for the overlapping regions 911 in many picked-up images 91 is needed. In the case where the amount of data (number of bits) of the weighting factor is increased in order to improve the quality of the combined image 92, the capacity required for the memory is further increased.

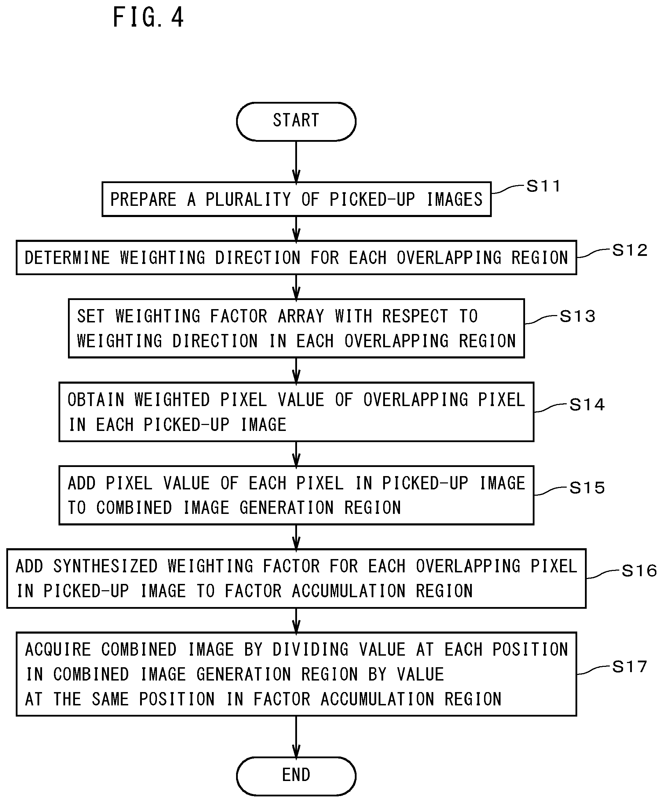

Next, an image combining process performed by the image combining apparatus 4 capable of combining a plurality of picked-up images at high speed with saved memory will be described. FIG. 4 is a flowchart showing an operation flow for combining a plurality of images by the image combining apparatus 4. In the image combining apparatus 4, first, a plurality of picked-up images are prepared (Step S11).

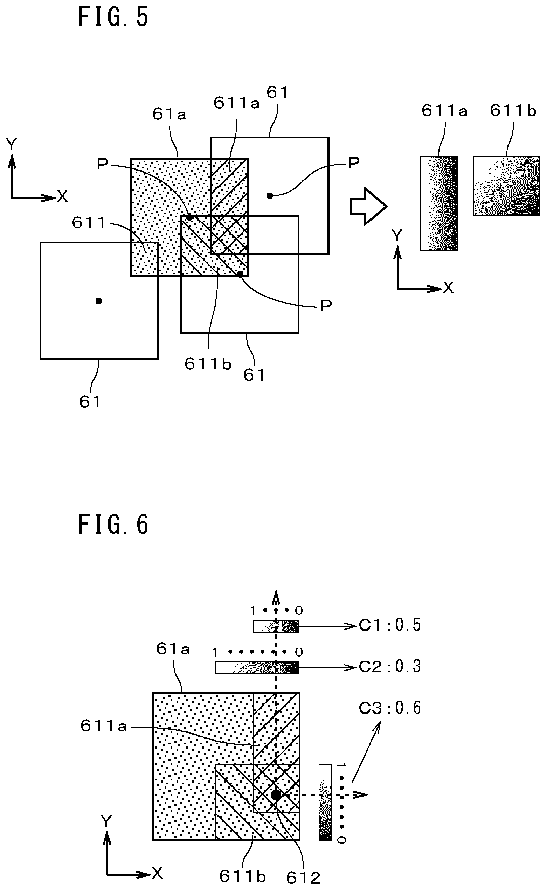

FIG. 5 is a view showing a plurality of picked-up images 61 and overlapping regions 611. In the present preferred embodiment, the moving mechanism 22 of the picked-up image acquisition part 2 sequentially arranges the image pickup part 21 above a plurality of image pickup positions P on the object, to thereby acquire a plurality of (data of) picked-up images 61 obtained by imaging the plurality of image pickup positions P, respectively. The plurality of picked-up images 61 have the same size. The left side of FIG. 5 shows the plurality of picked-up images 61 (one of them is represented by reference sign "61a") arranged in accordance with the relative positional relation of the plurality of image pickup positions P. In each picked-up image 61, pixels are arrayed in a first direction and a second direction which are orthogonal to each other. In FIG. 5 (and FIGs. 6, 7, and 9 described later), the first direction and the second direction which are array directions of the pixels are represented as an X direction and a Y direction, and in the following description, the first direction and the second direction will be referred to as the "X direction" and the "Y direction". Though only four picked-up images 61 are shown in the left side of FIG. 5, actually, many (for example, several thousands of) picked-up images 61 are acquired by imaging many image pickup positions P on the object, respectively.

In the plurality of picked-up images 61, in each combination of two picked-up images 61 corresponding to adjacent two image pickup positions P, provided is an overlapping region 611 in which the two picked-up images partially overlap each other (in FIG. 5, some of the overlapping regions are represented by reference signs "611a" and "611b"). Since the relative positional relation of the plurality of image pickup positions P is known, a range of the overlapping region 611 in each picked-up image 61 is also known. In the left side of FIG. 5, among the four picked-up images 61, a dot-shaped pattern is given to one picked-up image 61a, and differently-oriented hatch lines are given to the two overlapping regions 611a and 611b which are formed between the picked-up image 61a and two other picked-up images 61, respectively. The plurality of picked-up images 61 are inputted to and stored in the storage part 44 of the image combining apparatus 4. Though the picked-up image is a gray scale image in the present exemplary process, the picked-up image may be a color image.

The weighting direction determination part 41 determines a weighting direction to be used for specifying a weighting factor for each overlapping region 611 (Step S12). In the present exemplary process, a size of the overlapping region 611 in the X direction is compared with a first threshold value and a size thereof in the Y direction is compared with a second threshold value. Typically, the first threshold value and the second threshold value are the same value. When the size of the overlapping region 611 in the X direction is larger than the first threshold value and the size thereof in the Y direction is not larger than the second threshold value, only the Y direction is determined as the weighting direction. When the size of the overlapping region 611 in the X direction is not larger than the first threshold value and the size thereof in the Y direction is larger than the second threshold value, only the X direction is determined as the weighting direction.

In the case other than the above-described cases, the X direction and the Y direction are each determined as the weighting direction. The case other than the above-described cases is a case where the size of the overlapping region 611 in the X direction is larger than the first threshold value and the size thereof in the Y direction is larger than the second threshold value and a case where the size of the overlapping region 611 in the X direction is not larger than the first threshold value and the size thereof in the Y direction is not larger than the second threshold value. As described earlier, though the first threshold value and the second threshold value are typically the same value, in a case where a resolution in the X direction and that in the Y direction in the picked-up image 61 are different from each other, or the like case, for example, the first threshold value and the second threshold value may be different from each other (the same applies to an exemplary process described later). Further, like M times (0 < M < 1) the size of the picked-up image 61 in the X direction or the like, the first threshold value may be determined on the basis of the size of the picked-up image 61 (the same applies to the second threshold value).

In the example shown in the left side of FIG. 5, since a size of the overlapping region 611a in the X direction is not larger than the first threshold value and a size thereof in the Y direction is larger than the second threshold value, only the X direction is determined as the weighting direction. Since a size of the overlapping region 611b in the X direction is larger than the first threshold value and a size thereof in the Y direction is larger than the second threshold value, the X direction and the Y direction are each determined as the weighting direction. Thus, in Step S12, on the basis of respective sizes of each overlapping region 611 in the X direction and the Y direction, for the overlapping region 611, at least one of the X direction and the Y direction is determined as the weighting direction.

Subsequently, the weighted pixel value calculation part 42 sets a one-dimensional weighting factor array with respect to the weighting direction in the overlapping region 611 of each picked-up image 61 (Step S13). In the overlapping region 611 in which the weighting direction is the X direction, for example, an array of a weighting factor C[x0] is obtained from Eq. 1, assuming that the X coordinate of the overlapping region 611 on the most (-X) side (the left end in FIG. 5) is x, the width of the overlapping region 611 in the X direction is w, and the X coordinate of each pixel position included in the overlapping region 611 is x0.

[Eq. 1]

$$C[x0]$$

$$= \begin{cases} \dfrac{(x0 - x)}{w}, \\ \textit{where overlapping region is positioned at end on } (-X) \textit{side of picked up image} \\[2em] 1.0 - \dfrac{(x0 - x)}{w}, \\ \textit{where overlapping region is positioned at end on } (+X) \textit{side of picked up image} \end{cases}$$

In the weighting factor array obtained from Eq. 1, the weighting factor gradually decreases from 1 to 0, in the X direction, from a center side toward an outer side of the picked-up image 61 including the overlapping region 611. In the overlapping region 611, the weighting factors for the pixels arranged in the Y direction at each pixel position in the X direction are the same, and the weighting factors of the pixels arranged two-dimensionally in the overlapping region 611 are indicated by the one-dimensional weighting factor array with respect to the X direction. Therefore, as described later, for specifying a weighting factor for each of the pixels included in the overlapping region 611, it becomes possible to specify the weighting factor of the pixel easily at high speed without performing any complicated distance calculation. In the right side of FIG. 5, the magnitude of the weighting factor of each pixel in the overlapping region 611a whose weighting direction is the X direction is represented by shading of the gray scale.

In the weighting factor array with respect to the X direction obtained from Eq. 1, though the weighting factor is changed linearly with respect to a distance from an end of the overlapping region 611 in the X direction, the weighting factor may be changed in a curved line (nonlinearly) only if the weighting factor gradually decreases toward the outer side of the picked-up image 61. For one example, the Gaussian function or the like is used. Further, the functions in Eq. 1 or the like may be set as the weighting factor array. The same applies to the weighting factor array with respect to the Y direction described later.

Also in the overlapping region 611 whose weighting direction is the Y direction, like in Eq. 1, the weighting factor array is obtained. In the weighting factor array, the weighting factor gradually decreases from 1 to 0, in the Y direction, from a center side toward an outer side of the picked-up image 61 including the overlapping region 611. In the overlapping region 611, the weighting factors for the pixels arranged in the X direction at each pixel position in the Y direction are the same, and the weighting factors of the pixels arranged two-dimensionally in the overlapping region 611 are indicated by the one-dimensional weighting factor array with respect to the Y direction.

In the overlapping region 611 whose weighting direction is each of the X direction and the Y direction, a one-dimensional weighting factor array with respect to the X direction and a one-dimensional weighting factor array with respect to the Y direction are individually set. Further, in the overlapping region 611b shown in the right side of FIG. 5, for each pixel, a product of the weighting factor specified from the weighting factor array with respect to the X direction and the weighting factor specified from the weighting factor array with respect to the Y direction is represented by shading of the gray scale.

Subsequently, for each pixel (hereinafter, referred to as an "overlapping pixel") included in the overlapping region 611 in each picked-up image 61, the weighted pixel value calculation part 42 obtains a weighted pixel value of the overlapping pixel by weighting a pixel value of the overlapping pixel by using the weighting factor specified from the weighting factor array (Step S14). Specifically, in a case where the overlapping pixel is included in only one overlapping region 611 and only the weighting factor array with respect to any one of the X direction and the Y direction is set for the overlapping region 611 including the overlapping pixel, only one weighting factor is specified from the weighting factor array for the overlapping pixel. Then, the pixel value of the overlapping pixel is multiplied by the weighting factor, to thereby obtain the weighted pixel value.

On the other hand, in a case where the overlapping pixel is included in two or more overlapping regions 611 and/or a case where each of the X direction and the Y direction is determined as the weighting direction for the overlapping region 611 including the overlapping pixel, two or more weighting factor arrays are set for the overlapping pixel. In this case, for the overlapping pixel, the weighting factor is specified from each of the two or more weighting factor arrays. In the following description, N (N is an integer not smaller than 1) weighting factors specified for each overlapping pixel are expressed as weighting factor C1, weighting factor C2, ... weighting factor CN.

FIG. 6 is a view used for explaining calculation of a weighted pixel value of an overlapping pixel for which two or more weighting factors are specified, showing the picked-up image 61a in the left side of FIG. 5. In the upper side of the picked-up image 61a shown in FIG. 6, the weighting factor array with respect to the X direction in the overlapping region 611a and the weighting factor array with respect to the X direction in the overlapping region 611b are represented by shading of the gray scale, and in the right side of the picked-up image 61a, the weighting factor array with respect to the Y direction in the overlapping region 611b is represented by shading of the gray scale.

For example, the overlapping pixel 612 represented by a black dot in FIG. 6 is included in the overlapping region 611a and also in the overlapping region 611b. Therefore, for the overlapping pixel 612, the weighting factor C1 is specified from the weighting factor array with respect to the X direction in the overlapping region 611a, the weighting factor C2 is specified from the weighting factor array with respect to the X direction in the overlapping region 611b, and the weighting factor C3 is specified from the weighting factor array with respect to the Y direction in the overlapping region 611b. Specifically, the weighting factor C1 is 0.5, the weighting factor C2 is 0.3, and the weighting factor C3 is 0.6. The weighted pixel value of the overlapping pixel 612 is obtained by multiplying a pixel value V of the overlapping pixel 612 by a product of the weighting factors C1 to C3, i.e., $(0.5 \times 0.3 \times 0.6)$.

Thus, in the case where two or more weighting factors are specified for one overlapping pixel 612 in each picked-up image 61, the weighted pixel value of the overlapping pixel 612 is obtained by multiplying the pixel value of the overlapping pixel 612 by a product of two or more weighting factors. The weighted pixel value is handled as a new pixel value of the overlapping pixel 612. In the following description, in the calculation of the weighted pixel value, a value by which the pixel value of the overlapping pixel 612 is multiplied, i.e., a product of the weighting factors specified for the overlapping pixel 612 (when only one weighting factor is specified, the weighting factor) is referred to as a "synthesized weighting factor".

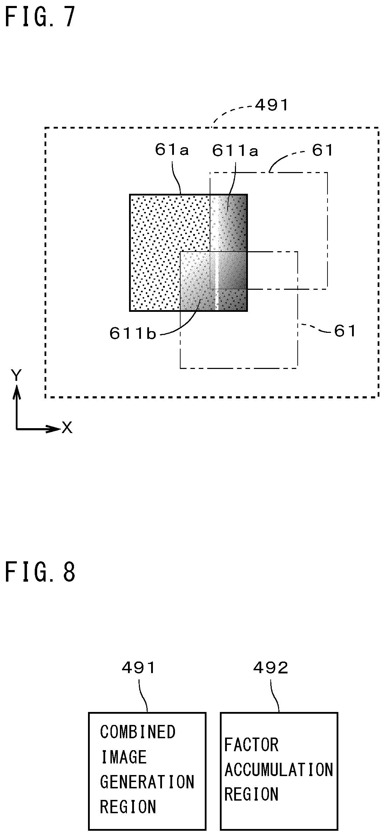

FIG. 7 is a view showing a combined image generation region 491. The combined image generation region 491 is a storage region used for generating a combined image obtained by combining a plurality of picked-up images 61 and is set in an internal memory of the CPU 31, an internal memory of the GPU 39, the RAM 33, or the like. After the weighted pixel value of each overlapping pixel 612 in each picked-up image 61 is obtained, the combined image acquisition part 43 adds the pixel value of each pixel in the picked-up image 61 to the combined image generation region 491 (Step S15). In detail, in the combined image generation region 491, an arrangement of the plurality of picked-up images 61 is determined in advance in accordance with the relative positional relation of the plurality of the image pickup positions P, and to a position where pixels in the picked-up images 61 arranged in the combined image generation region 491 overlap one another, the pixel values of the pixels are added. An initial value of each position in the combined image generation region 491 is 0. In FIG. 7, the picked-up image 61a arranged in the combined image generation region 491 is represented by a solid line and two picked-up images 61 which form the overlapping regions 611a and 611b, respectively, between the picked-up image 61a and the two picked-up images are represented by a two-dot chain line. In the overlapping regions 611a and 611b, shading patterns of the gray scale shown in the right side of FIG. 5 overlaps the dot-shaped pattern of the picked-up image 61a. Actually, in the picked-up image 61a, there are other overlapping regions 611.

In the addition of the pixel value at each position of the combined image generation region 491, when the pixel of the picked-up image 61 which overlaps the position is not the overlapping pixel 612, the pixel value of the pixel is added to the position without any change. On the other hand, when the pixel is the overlapping pixel 612, a new pixel value of the pixel, i.e., the weighted pixel value is added to the position. As described earlier, each overlapping pixel 612 in each picked-up image 61 is included in one or two or more overlapping regions 611, and in the combined image generation region 491, at a position that the overlapping pixel 612 of one picked-up image 61 overlaps, other one or more picked-up images 61 also overlap. Therefore, a value at the position is a sum of the weighted pixel values of the overlapping pixels 612 in two or more picked-up images 61 which overlap the position.

[Table 1]

| Image No. | Pixel Value V | Weighting Factor C1 | Weighting Factor C2 | Weighting Factor C3 | Synthesized Weighting Factor C1*C2*C3 | Weighted Pixel Value |
|---|---|---|---|---|---|---|
| 1 | 100 | 0.5 | 0.4 | 0.3 | 0.06 | 6 |
| 2 | 200 | 0.3 | 0.2 | 0.5 | 0.03 | 6 |
| 3 | 150 | 0.5 | 0.4 | 0.3 | 0.06 | 9 |
| | | | | Total | 0.15 | 21 |

In Table 1, in the combined image generation region 491, attention is paid to the position where the overlapping pixels 612 of three picked-up images 61 overlap one another, and as to each picked-up image 61, shown are the pixel value V, the weighting factors C1 to C3, the synthesized weighting factor, and the weighted pixel value of the overlapping pixel 612 corresponding to the position. Further, in Table 1, image numbers (Nos.) 1 to 3 are given to the three picked-up images 61. A value at the position in the combined image generation region 491 is a sum of the weighted pixel values of the overlapping pixels 612 in the three picked-up images 61 with the image Nos. 1 to 3, i.e., 21.

FIG. 8 is a view showing the combined image generation region 491 and a factor accumulation region 492. The factor accumulation region 492 is a storage region used for accumulating the synthesized weighting factors corresponding to the positions, respectively, in the combined image generation region 491 and includes a region having the same size as the region in which the plurality of picked-up images 61 are arranged in the combined image generation region 491. Like the combined image generation region 491, the factor accumulation region 492 is set in the internal memory of the CPU 31, the internal memory of the GPU 39, the RAM 33, or the like.

In the combined image acquisition part 43, when the weighted pixel value of each overlapping pixel 612 in the picked-up image 61 is added to the combined image generation region 491, the synthesized weighting factor used for the overlapping pixel 612 is added to the factor accumulation region 492 (Step S16). Specifically also in the factor accumulation region 492, like in the combined image generation region 491, an arrangement of the plurality of picked-up images 61 is determined in advance in accordance with the relative positional relation of the plurality of the image pickup positions P, and to a position where overlapping pixels 612 in the picked-up images 61 arranged in the factor accumulation region 492 overlap one another, the synthesized weighting factors used for calculating the weighted pixel values of the overlapping pixels 612 are added. In the factor accumulation region 492, since the position where the overlapping pixel 612 of the one picked-up image 61 overlaps is also overlapped with other one or more picked-up images 61, a value at the position is a sum of the synthesized weighting factors of the overlapping pixels 612 in two or more picked-up images 61 which overlap the position. A value at the position in the factor accumulation region 492 corresponding to the position in the combined image generation region 491 to which attention is paid in Table 1 is a sum of the synthesized weighting factors of the overlapping pixels 612 of the three picked-up images 61 with image Nos. 1 to 3, i.e., 0.15. Further, in the factor accumulation region 492, a value of "1", for example, is given to a position corresponding to a pixel other than the overlapping pixel 612.

After the pixel values of the pixels in all the picked-up images 61 are added to the combined image generation region 491 and the synthesized weighting factors for all the overlapping pixels 612 are added to the factor accumulation region 492, in the combined image acquisition part 43, the value at each position in the combined image generation region 491 is changed to a value obtained by dividing the value by a value at the same position in the factor accumulation region 492. At the position in the combined image generation region 491 to which attention is paid in Table 1, by dividing the sum of the weighted pixel values, i.e., 21 by the sum of the synthesized weighting factors, i.e., 0.15, the value at the position is changed to 140. Further, in the combined image generation region 491, at a position corresponding to a pixel other than the overlapping pixel 612, since the value in the factor accumulation region 492 is 1, the value at the position is not changed.

Each position in the combined image generation region 491 corresponds to a pixel of the combined image, and by the above-described processing, in the combined image generation region 491, the combined image obtained by combining the plurality of picked-up images 61 is acquired (Step S17). In the combined image, a pixel value of a pixel (hereinafter, similarly referred to as an "overlapping pixel") corresponding to each overlapping pixel 612 is obtained by using weighted pixel values at the overlapping pixel 612 in the two or more picked-up images 61 including the overlapping pixel 612.

Specifically, the pixel value of the above-described overlapping pixel in the combined image is obtained by dividing the sum of the weighted pixel values at the overlapping pixel 612 in the two or more picked-up images 61 by the sum of the factors (i.e., the synthesized weighting factors) by which the pixel values at the overlapping pixel 612 are multiplied for obtaining the weighted pixel values in the two or more picked-up images 61. The density in a region (hereinafter, similarly referred to as an "overlapping region") of the combined image corresponding to the overlapping region 611 can be thereby made approximately coincident with the density in other regions and it therefore becomes possible to suppress occurrence of unintended change in the density. Particularly, even in a case where there is an overlapping pixel at which two or more overlapping regions 611 overlap one another in the combined image, in other words, a case where there is an overlapping pixel at which three or more picked-up images 61 overlap one another, it is possible to appropriately and easily obtain a pixel value of the overlapping pixel by the above-described method. The acquired combined image is used, for example, for the inspection of a pattern on a substrate or cells, or the like.

Though the storage region including the whole of the combined image is ensured in the combined image generation region 491 and the factor accumulation region 492 in the above-described image combining process, each of the combined image generation region 491 and the factor accumulation region 492 may be a region for storing only values of positions overlapping the overlapping pixels 612. In this case, as to each position not overlapping any overlapping pixel 612 in the combined image, the pixel value of the pixel in the picked-up image 61 corresponding to the position is used without any change.

As described above, in the image combining method shown in FIG. 4, a plurality of picked-up images 61 which are images obtained by imaging a plurality of image pickup positions P on an object, respectively, among which each combination of two images corresponding to adjacent image pickup positions P is provided with an overlapping region 611 where the two images partially overlap each other is prepared (Step S11). Subsequently, on the basis of respective sizes of each overlapping region 611 in the X direction and the Y direction, at least one of the X direction and the Y direction is determined as the weighting direction for the overlapping region 611 (Step S12). In the overlapping region 611 of each picked-up image 61, a one-dimensional weighting factor array in which a weighting factor gradually decreases toward an outer side of the picked-up image 61 in the weighting direction is set (Step S13). Assuming that a pixel included in each overlapping region 611 is an overlapping pixel 612, a weighted pixel value of each overlapping pixel 612 in each picked-up image 61 is obtained by weighting a pixel value of the overlapping pixel 612 in the picked-up image 61 by using a weighting factor specified from the weighting factor array for the overlapping pixel 612 (Step S14). After that, a combined image is acquired by combining the plurality of picked-up images 61 in accordance with the plurality of image pickup positions P (Steps S15 to S17). At that time, a pixel value of each overlapping pixel in the combined image is obtained by using the weighted pixel values in two or more picked-up images 61 including the overlapping pixel.

In the process of Comparative Example described with reference to FIG. 3, since two-dimensional arrays of the weighting factors for the overlapping regions of a large number of picked-up images are prepared, a high-capacity memory for storing the two-dimensional arrays of the weighting factors is needed. In a case where the amount of data (the number of bits) of the weighting factors is increased in order to improve the quality of the combined image, the capacity required for the memory further increases. In contrast to this, in the image combining method shown in FIG. 4, the weighting direction is determined on the basis of the respective sizes of each overlapping region 611 in the X direction and the Y direction, and the one-dimensional weighting factor array with respect to the weighting direction is set for the overlapping region 611. In the image combining method, since it is not necessary to store the two-dimensional arrays of the weighting factors for the overlapping regions 611 of a large number of picked-up images 61, it is possible to generate the combined image by combining the plurality of picked-up images 61 with saved memory as compared with the process of Comparative Example.

There is a possible method in which the picked-up images are sequentially combined one by one, as a process of another Comparative Example for combining a plurality of images, but in this case, a long time is needed to combine the plurality of picked-up images. Further, the pixel values in the overlapping regions of the combined image may be varied depending on the combination order due to an effect of rounding error, i.e., a calculation error may occur. In contrast to this, in the image combining method shown in FIG. 4, since the plurality of picked-up images 61 can be collectively processed, it is possible to combine the plurality of picked-up images 61 at high speed. Furthermore, it is possible to avoid occurrence of the calculation error depending on the combination order.

In preferable Step S12, when the size of each overlapping region 611 in one of the X direction and the Y direction is larger than a predetermined threshold value and the size thereof in the other direction is not larger than the threshold value, only the other direction is determined as the weighting direction. It is thereby possible to determine an appropriate weighting direction approximately along a direction of relative position of two picked-up images 61 which form the overlapping region 611 and achieve generation of a combined image having a beautiful joint. Further, it becomes possible to generate a combined image at higher speed with more saved memory by determining only one direction as the weighting direction for some of the overlapping regions 611.

In a case where one overlapping pixel 612 in each picked-up image 61 is included in two or more overlapping regions 611 and/or each of the X direction and the Y direction is determined as the weighting direction for the overlapping pixel 612, in Step S14, two or more weighting factors are specified for the overlapping pixel 612. In such a case, it is preferable that the weighted pixel value of the overlapping pixel 612 should be obtained by multiplying the pixel value of the overlapping pixel 612 by the product of the two or more weighting factors. It is thereby possible to easily obtain the weighted pixel value of the overlapping pixel 612.

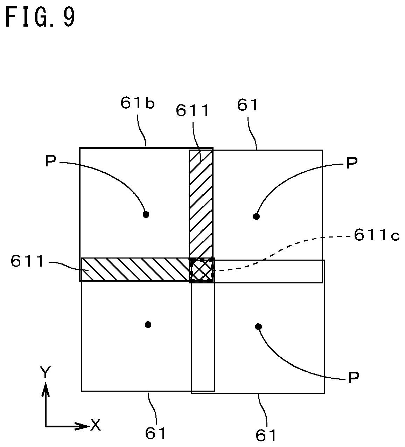

Next, another example of the image combining process will be described. FIG. 9 is a view showing a plurality of picked-up images 61, showing the plurality of picked-up images 61 arranged in accordance with the relative positional relation of the plurality of image pickup positions P. In FIG. 9, one picked-up image 61b is represented by a thick line and the other picked-up images 61 are each represented by a thin line. Further, differently-oriented hatch lines are given to two overlapping regions 611 formed between the picked-up image 61b and the picked-up image 61 arranged on the (+X) side of the picked-up image 61b and between the picked-up image 61b and the picked-up image 61 arranged on the (-Y) side of the picked-up image 61b. Furthermore, an overlapping region 611c formed between the picked-up image 61b and a picked-up image 61 arranged on the (+X) side and the (-Y) side of the picked-up image 61b (i.e., the picked-up image 61 on the lower-right side of the picked-up image 61b in FIG. 9) is surrounded by a thick broken line.

After the plurality of picked-up images 61 and 61b shown in FIG. 9 are prepared (Step S11 in FIG. 4), like in the above-described exemplary process, the weighting direction determination part 41 compares the size of each overlapping region 611 in the X direction with the first threshold value and compares the size thereof in the Y direction with the second threshold value, to thereby determine the weighting direction for the overlapping region 611 (Step S12). At that time, when the size of the overlapping region 611 in the X direction is larger than the first threshold value and the size thereof in the Y direction is not larger than the second threshold value, only the Y direction is determined as the weighting direction (see the overlapping region 611 between the picked-up image 61b and the picked-up image 61 on the (-Y) side thereof). When the size of the overlapping region 611 in the X direction is not larger than the first threshold value and the size thereof in the Y direction is larger than the second threshold value, only the X direction is determined as the weighting direction (see the overlapping region 611 between the picked-up image 61b and the picked-up image 61 on the (+X) side thereof).

Further, in a case where the size of the overlapping region 611 in the X direction is not larger than the first threshold value and the size thereof in the Y direction is not larger than the second threshold value, when the whole of the overlapping region 611 overlaps another overlapping region 611, no weighting direction is determined and the overlapping region 611 is made invalid. In the example shown in FIG. 9, the size of the overlapping region 611c in the X direction is not larger than the first threshold value, the size thereof in the Y direction is not larger than the second threshold value, and further the whole of the overlapping region 611c overlaps other two overlapping regions 611 with hatch lines. Therefore, the overlapping region 611c is made invalid and not handled as the overlapping region in the later process steps. In cases other than the above-described case, each of the X direction and the Y direction is determined as the weighting direction. The operations in Steps S13 to S17 are the same as those in the above-described exemplary process except that only the valid overlapping region 611 is used.

Thus, in another example of the image combining method, in Step S12, when the whole of one overlapping region 611 overlaps any other overlapping region 611 and the one overlapping region 611 has a predetermined size or less, the one overlapping region 611 is excluded. The one overlapping region 611 has an effect on the combined image, which is smaller than that of the other overlapping regions 611 but if the combined image is generated with the one overlapping region 611 left therein, there is a possibility that something strange arises in the combined image due to a local change in the density in a region corresponding to the one overlapping region 611, or the like. On the other hand, in the above-described exemplary process, since the one overlapping region 611 is excluded, it is possible to suppress something strange from arising in the combined image.

In the image combining method and the image combining apparatus 4 described above, various modifications can be made.

In Step S12 of FIG. 4, for example, the weighting direction may be determined on the basis of the ratio (aspect ratio) of the size of the overlapping region 611 in the Y direction to that in the X direction. In this case, for example, only the X direction is determined as the weighting direction when the ratio exceeds a predetermined range, both the X direction and the Y direction are each determined as the weighting direction when the ratio is within the predetermined range, and only the Y direction is determined as the weighting direction when the ratio falls below the predetermined range. Thus, determination of the weighting direction for each overlapping region 611 may be performed by any one of various methods on the basis of the sizes of the overlapping region 611 in the X direction and the Y direction.

The combined image acquired by the image combining method and the image combining apparatus 4 described above may be used for any purpose other than the inspection of a pattern on a substrate or cells.

The configurations in the above-described preferred embodiment and variations may be combined as appropriate only if those do not conflict with one another.

## REFERENCE SIGNS LIST

**EP 4 481 670 B1**

| | |
|---|---|
| 3 | Computer |
| 4 | Image combining apparatus |
| 41 | Weighting direction determination part |
| 42 | Weighted pixel value calculation part |
| 43 | Combined image acquisition part |
| 44 | Storage part |
| 61, 61a, 61b | Picked-up image |
| 611, 611a to 611c | Overlapping region |
| 612 | Overlapping pixel |
| 811 | Program |
| P | Image pickup position |
| S11 to S17 | Step |

**Claims**

1. An image combining method for combining a plurality of images, comprising:

   a) preparing a plurality of picked-up images (61, 61a, 61b) which are images obtained by imaging a plurality of image pickup positions (P) on an object, respectively, among which each combination of two images corresponding to adjacent image pickup positions is provided with an overlapping region (611, 611a to 611c) where said two images partially overlap each other;
   b) determining at least one of a first direction and a second direction which are array directions of pixels in said plurality of picked-up images, as a weighting direction, for each overlapping region on the basis of respective sizes of said each overlapping region in said first direction and said second direction;
   c) setting a one-dimensional weighting factor array in which a weighting factor gradually decreases toward an outer side of each picked-up image in said weighting direction in said overlapping region of said each picked-up image;
   d) obtaining a weighted pixel value of each of overlapping pixels (612) in said each picked-up image, which are pixels included in said each overlapping region, by weighting a pixel value of each overlapping pixel in said each picked-up image by using a weighting factor specified from said weighting factor array for said each overlapping pixel; and
   e) acquiring a combined image by combining said plurality of picked-up images in accordance with said plurality of image pickup positions,

   wherein a pixel value of said each overlapping pixel in said combined image is obtained by using weighted pixel values in two or more picked-up images including said each overlapping pixel in said operation e),
   **characterized in that**
   in said operation b), in a first case where a size of said each overlapping region in said first direction is larger than a first threshold value and a size thereof in said second direction is not larger than a second threshold value, only said second direction is determined as said weighting direction,
   in a second case where the size of said each overlapping region in said first direction is not larger than said first threshold value and the size thereof in said second is larger than said second threshold value, only said first direction is determined as said weighting direction, and
   in the case other than said first and second cases, said first direction and said second direction are each determined as said weighting direction.

2. The image combining method according to claim 1, wherein
   when two or more weighting factors are specified for one overlapping pixel in said each picked-up image, a weighted pixel value of said one overlapping pixel is obtained by multiplying a pixel value of said one overlapping pixel by a product of said two or more weighting factors in said operation d).

3. The image combining method according to claim 1 or 2, wherein
   in said operation e), a pixel value of said each overlapping pixel in said combined image is obtained by dividing a sum of weighted pixel values at said each overlapping pixel in said two or more picked-up images by a sum of factors by which pixel values at said each overlapping pixel in said two or more picked-up images are multiplied for obtaining said weighted pixel values.

4. The image combining method according to any one of claims 1 to 3, wherein

when the whole of one overlapping region overlaps another overlapping region, and when said one overlapping region has a predetermined size or less, said one overlapping region is excluded in said operation b).

5. An image combining apparatus (4) for combining a plurality of images, comprising:

a storage part (44) for storing a plurality of picked-up images (61, 61a, 61b) which are images obtained by imaging a plurality of image pickup positions (P) on an object, respectively, among which each combination of two images corresponding to adjacent image pickup positions is provided with an overlapping region (611, 611a to 611c) where said two images partially overlap each other;

a weighting direction determination part (41) for determining at least one of a first direction and a second direction which are array directions of pixels in said plurality of picked-up images, as a weighting direction, for each overlapping region on the basis of respective sizes of said each overlapping region in said first direction and said second direction;

a weighted pixel value calculation part (42) for obtaining a weighted pixel value of each of overlapping pixels (612) in each picked-up image, which are pixels included in said each overlapping region, by setting a one-dimensional weighting factor array in which a weighting factor gradually decreases toward an outer side of said each picked-up image in said weighting direction in said overlapping region of said each picked-up image and weighting a pixel value of each overlapping pixel in said each picked-up image by using a weighting factor specified from said weighting factor array for said each overlapping pixel; and

a combined image acquisition part (43) for acquiring a combined image by combining said plurality of picked-up images in accordance with said plurality of image pickup positions,

wherein said combined image acquisition part obtains a pixel value of said each overlapping pixel in said combined image by using weighted pixel values in two or more picked-up images including said each overlapping pixel, **characterized in that**

in said weighting direction determination part, in a first case where a size of said each overlapping region in said first direction is larger than a first threshold value and a size thereof in said second direction is not larger than a second threshold value, only said second direction is determined as said weighting direction,

in a second case where the size of said each overlapping region in said first direction is not larger than said first threshold value and the size thereof in said second is larger than said second threshold value, only said first direction is determined as said weighting direction, and

in the case other than said first and second cases, said first direction and said second direction are each determined as said weighting direction.

6. A computer-readable program (811) comprising instructions which, when the program is executed by a computer, cause the computer (3) to carry out the method of any one of claims 1 to 4.

**Patentansprüche**

1. Bildkombinationsverfahren zum Kombinieren einer Vielzahl von Bildern, umfassend:

a) Vorbereiten einer Vielzahl von aufgenommenen Bildern (61, 61a, 61b), die Bilder sind, die jeweils durch Abbilden einer Vielzahl von Bildaufnahmepositionen (P) auf einem Objekt erhalten werden, unter denen jede Kombination von zwei Bildern, die benachbarten Bildaufnahmepositionen entsprechen, mit einem Überlappungsbereich (611, 611a bis 611c) versehen ist, wo die zwei Bilder einander teilweise überlappen;

b) Bestimmen einer ersten Richtung und/oder einer zweiten Richtung, die Array-Richtungen von Pixeln in der Vielzahl von aufgenommenen Bildern sind, als eine Gewichtungsrichtung für jeden Überlappungsbereich auf der Grundlage jeweiliger Größen jedes Überlappungsbereichs in der ersten Richtung und der zweiten Richtung;

c) Festlegen eines eindimensionalen Gewichtungsfaktor-Arrays, in dem ein Gewichtungsfaktor zu einer Außenseite jedes aufgenommenen Bilds in der Gewichtungsrichtung in dem Überlappungsbereich jedes aufgenommenen Bilds allmählich abnimmt;

d) Erhalten eines gewichteten Pixelwerts jedes der überlappenden Pixel (612) in jedem aufgenommenen Bild, die Pixel sind, die in jedem Überlappungsbereich enthalten sind, durch Gewichten eines Pixelwerts jedes überlappenden Pixels in jedem aufgenommenen Bild unter Verwendung eines Gewichtungsfaktors, der von dem Gewichtungsfaktor-Array für jedes überlappende Pixel spezifiziert wird; und

e) Erfassen eines kombinierten Bilds durch Kombinieren der Vielzahl von aufgenommenen Bildern gemäß der Vielzahl von Bildaufnahmepositionen,

EP 4 481 670 B1

wobei ein Pixelwert jedes überlappenden Pixels in dem kombinierten Bild unter Verwendung gewichteter Pixelwerte in zwei oder mehr aufgenommenen Bildern, die jedes überlappende Pixel enthalten, in dem Schritt e) erhalten wird, **dadurch gekennzeichnet, dass**
in dem Schritt b) in einem ersten Fall, in dem eine Größe jedes Überlappungsbereichs in der ersten Richtung größer als ein erster Schwellenwert ist und eine Größe davon in der zweiten Richtung nicht größer als ein zweiter Schwellenwert ist, nur die zweite Richtung als die Gewichtungsrichtung bestimmt wird,
in einem zweiten Fall, in dem die Größe jedes Überlappungsbereichs in der ersten Richtung nicht größer als der erste Schwellenwert ist und die Größe davon in der zweiten Richtung größer als der zweite Schwellenwert ist, nur die erste Richtung als die Gewichtungsrichtung bestimmt wird, und
in dem anderen Fall als dem ersten und dem zweiten Fall die erste Richtung und die zweite Richtung jeweils als die Gewichtungsrichtung bestimmt werden.

2. Bildkombinationsverfahren nach Anspruch 1, wobei
wenn zwei oder mehr Gewichtungsfaktoren für ein überlappendes Pixel in jedem aufgenommenen Bild spezifiziert werden, ein gewichteter Pixelwert des einen überlappenden Pixels durch Multiplizieren eines Pixelwerts des einen überlappenden Pixels mit einem Produkt der zwei oder mehr Gewichtungsfaktoren in dem Schritt d) erhalten wird.

3. Bildkombinationsverfahren nach Anspruch 1 oder 2, wobei
in dem Schritt e) ein Pixelwert jedes überlappenden Pixels in dem kombinierten Bild durch Dividieren einer Summe von gewichteten Pixelwerten an jedem überlappenden Pixel in den zwei oder mehr aufgenommenen Bildern durch eine Summe von Faktoren erhalten wird, mit denen Pixelwerte an jedem überlappenden Pixel in den zwei oder mehr aufgenommenen Bildern multipliziert werden, um die gewichteten Pixelwerte zu erhalten.

4. Bildkombinationsverfahren nach einem der Ansprüche 1 bis 3, wobei
wenn der gesamte Überlappungsbereich einen anderen Überlappungsbereich überlappt und wenn der eine Überlappungsbereich eine vorbestimmte Größe oder weniger aufweist, der eine Überlappungsbereich in dem Schritt b) ausgeschlossen wird.

5. Bildkombinationsvorrichtung (4) zum Kombinieren einer Vielzahl von Bildern, umfassend:

einen Speicherteil (44) zum Speichern einer Vielzahl von aufgenommenen Bildern (61, 61a, 61b), die Bilder sind, die jeweils durch Abbilden einer Vielzahl von Bildaufnahmepositionen (P) auf einem Objekt erhalten werden, unter denen jede Kombination von zwei Bildern, die benachbarten Bildaufnahmepositionen entsprechen, mit einem Überlappungsbereich (611, 611a bis 611c) versehen ist, wo die zwei Bilder einander teilweise überlappen;
einen Gewichtungsrichtungsbestimmungsteil (41) zum Bestimmen einer ersten Richtung und/oder einer zweiten Richtung, die Array-Richtungen von Pixeln in der Vielzahl von aufgenommenen Bildern sind, als eine Gewichtungsrichtung für jeden Überlappungsbereich auf der Grundlage jeweiliger Größen jedes Überlappungsbereichs in der ersten Richtung und der zweiten Richtung;
einen Gewichtungspixelwert-Berechnungsteil (42) zum Erhalten eines gewichteten Pixelwerts jedes der überlappenden Pixel (612) in jedem aufgenommenen Bild, die Pixel sind, die in jedem Überlappungsbereich enthalten sind, durch Festlegen eines eindimensionalen Gewichtungsfaktor-Arrays, in dem ein Gewichtungsfaktor zu einer Außenseite jedes aufgenommenen Bilds in der Gewichtungsrichtung in dem Überlappungsbereich jedes aufgenommenen Bilds allmählich abnimmt, und Gewichten eines Pixelwerts jedes überlappenden Pixels in jedem aufgenommenen Bild unter Verwendung eines Gewichtungsfaktors, der von dem Gewichtungsfaktor-Array für jedes überlappende Pixel spezifiziert wird; und
einen Kombiniertes-Bild-Erfassungsteil (43) zum Erfassen eines kombinierten Bilds durch Kombinieren der Vielzahl von aufgenommenen Bildern gemäß der Vielzahl von Bildaufnahmepositionen,
wobei der Kombiniertes-Bild-Erfassungsteil einen Pixelwert jedes überlappenden Pixels in dem kombinierten Bild unter Verwendung gewichteter Pixelwerte in zwei oder mehr aufgenommenen Bildern, die jedes überlappende Pixel enthalten, erhält, **dadurch gekennzeichnet, dass**
in dem Gewichtungsrichtungsbestimmungsteil in einem ersten Fall, in dem eine Größe jedes Überlappungsbereichs in der ersten Richtung größer als ein erster Schwellenwert ist und eine Größe davon in der zweiten Richtung nicht größer als ein zweiter Schwellenwert ist, nur die zweite Richtung als die Gewichtungsrichtung bestimmt wird, in einem zweiten Fall, in dem die Größe jedes Überlappungsbereichs in der ersten Richtung nicht größer als der erste Schwellenwert ist und die Größe davon in der zweiten Richtung größer als der zweite Schwellenwert ist, nur die erste Richtung als die Gewichtungsrichtung bestimmt wird, und
in dem anderen Fall als dem ersten und dem zweiten Fall die erste Richtung und die zweite Richtung jeweils als die Gewichtungsrichtung bestimmt werden.

12

6. Computerlesbares Programm (811), umfassend Anweisungen, die, wenn das Programm von einem Computer ausgeführt wird, den Computer (3) veranlassen, das Verfahren nach einem der Ansprüche 1 bis 4 auszuführen.

**Revendications**

1. Procédé de combinaison d'images pour la combinaison d'une pluralité d'images, comprenant :

   a) la préparation d'une pluralité d'images saisies (61, 61a, 61b), à savoir des images obtenues par l'imagerie d'une pluralité de positions de saisie d'images (P) sur un objet, respectivement, parmi lesquelles chaque combinaison de deux images correspondant à des positions de saisie d'images adjacentes comporte une zone chevauchante (611, 611a, 611c) où lesdites deux images se chevauchent partiellement ;
   b) la détermination d'au moins une d'une première direction et d'une deuxième direction, qui sont des directions d'agencement de pixels dans ladite pluralité d'images saisies, en tant que direction pondérale, pour chaque zone chevauchante en fonction de tailles respectives de ladite chaque zone chevauchante dans ladite première direction et ladite deuxième direction ;
   c) l'obtention d'un réseau à facteur de pondération unidimensionnel dans lequel un facteur de pondération diminue progressivement vers un côté extérieur de chaque image saisie dans ladite direction pondérale dans ladite zone chevauchante de ladite chaque image saisie ;
   d) l'obtention d'une valeur pondérée de pixel de chacun des pixels chevauchants (612) dans ladite chaque image saisie, à savoir des pixels compris dans ladite chaque zone chevauchante, en pondérant une valeur de pixel de chaque pixel chevauchant dans ladite chaque image saisie en utilisant un facteur de pondération spécifié, d'après ledit réseau à facteur de pondération pour ledit chaque pixel chevauchant ; et
   e) l'acquisition d'une image combinée en combinant ladite pluralité d'images saisies conformément à ladite pluralité de positions de saisie d'images,

      une valeur de pixel desdits chacun des pixels chevauchants dans ladite image combinée étant obtenue en utilisant des valeurs de pixel pondérées dans deux ou plusieurs images saisies, y compris ledit chaque pixel chevauchant à ladite opération e),
      **caractérisé en ce que**
      à ladite opération b), dans un premier cas où une taille de chaque zone chevauchante dans ladite première direction est plus grande qu'une première valeur seuil, et une taille de celle-ci dans ladite deuxième direction n'est pas plus grande qu'une deuxième valeur seuil, seule ladite deuxième direction est établie comme étant ladite direction pondérale,
      dans un deuxième cas où la taille de ladite chaque zone chevauchante dans ladite première direction ne dépasse pas celle de ladite première valeur seuil et sa taille dans ladite deuxième dépasse celle de ladite deuxième valeur seuil, seule la première direction est établie comme étant ladite direction pondérale, et dans le cas autre que lesdits premier et deuxième cas, ladite première direction et ladite deuxième direction sont chacune établies comme étant ladite direction pondérale.

2. Procédé de combinaison d'images selon la revendication 1,
   dans lequel lorsque deux ou plusieurs facteurs de pondération sont spécifiés pour un pixel chevauchant dans ladite chaque image saisie, une valeur de pixel pondérée dudit un pixel chevauchant s'obtient en multipliant une valeur de pixel dudit un pixel chevauchant par un produit desdits deux ou plusieurs facteurs de pondération à ladite opération d).

3. Procédé de combinaison d'images selon la revendication 1 ou 2,
   dans lequel, à ladite opération e), une valeur de pixel dudit chaque pixel chevauchant dans ladite image combinée s'obtient en divisant une somme de valeurs de pixel pondérées audit chaque pixel chevauchant dans lesdites deux ou plusieurs images saisies par une somme de facteurs par laquelle des valeurs de pixel audit chaque pixel chevauchant dans lesdites deux ou plusieurs images saisies sont multipliées pour obtenir lesdites valeurs de pixel pondérées.

4. Procédé de combinaison d'images selon une quelconque des revendications 1 à 3,
   dans lequel l'intégralité d'une zone chevauchante chevauche une autre zone chevauchante, et lorsque ladite une zone chevauchante présente une taille prédéterminée, ou inférieure à celle-ci, ladite une zone chevauchante est exclue à ladite opération b).

5. Appareil de combinaison d'images (4) pour combiner une pluralité d'images, comprenant :

une partie de stockage (44) pour stocker une pluralité d'images saisies (61, 61a, 61b), à savoir des images obtenues par l'imagerie d'une pluralité de positions de saisie d'images (P) sur un objet, respectivement, parmi lesquelles chaque combinaison de deux images correspondant à des positions de saisie d'images adjacentes comporte une zone chevauchante (611, 611a, 611c) où lesdites deux images se chevauchent partiellement ;

un élément de détermination de la direction pondérale (41) pour déterminer au moins une d'une première direction et d'une deuxième direction, qui sont des directions de réseau de pixels dans ladite pluralité d'images saisies, en tant que direction pondérale, pour chaque zone chevauchante en fonction de tailles respectives de chaque zone chevauchante dans ladite première direction et ladite deuxième direction ;

un élément de calcul de la valeur pondérée des pixels (42) pour obtenir une valeur pondérée de pixel de chacun des pixels chevauchants (612) dans chaque image saisie, à savoir des pixels compris dans ladite chaque zone chevauchante, en établissant un facteur de pondération unidimensionnel dans lequel un facteur de pondération diminue progressivement vers un côté extérieur de ladite chaque image saisie dans ladite direction pondérale dans ladite zone chevauchante de ladite chaque image saisie, et en pondérant une valeur de pixel de chaque pixel chevauchant dans ladite image saisie en utilisant un facteur de pondération spécifié d'après ledit réseau à facteur de pondération pour ledit chaque pixel chevauchant ; et

un élément d'acquisition d'une image combinée (43) pour acquérir une image combinée en combinant ladite pluralité d'images saisies conformément à ladite pluralité de positions de saisie d'images,

ledit élément d'acquisition d'une image combinée obtenant une valeur de pixel dudit chaque pixel chevauchant dans ladite image combinée en utilisant des valeurs de pixel pondérées dans deux ou plusieurs images saisies, y compris ledit chaque pixel chevauchant, **caractérisé en ce que**

dans ledit élément de détermination de la direction pondérale, dans un premier cas où une taille de ladite chaque zone chevauchante dans ladite première direction est plus grande qu'une première valeur seuil, et une taille de celle-ci dans ladite deuxième direction n'est pas plus grande qu'une deuxième valeur seuil, seule ladite deuxième direction est établie comme étant ladite direction pondérale,

dans un deuxième cas où la taille de ladite chaque zone chevauchante dans ladite première direction ne dépasse pas celle de ladite première valeur seuil et la taille de celle-ci dans ladite deuxième dépasse celle de ladite deuxième valeur seuil, seule la première direction est établie comme étant ladite direction pondérale, et

dans un cas autre que lesdits premier et deuxième cas, ladite première direction et ladite deuxième direction sont chacune établies comme étant ladite direction pondérale.

6.  Programme lisible par ordinateur (811) comprenant des instructions, qui, lorsque le programme est exécuté par un ordinateur, amène l'ordinateur (3) à effectuer le procédé selon une quelconque des revendications 1 à 4.

FIG. 1

PICKED-UP IMAGE
ACQUISITION PART — 2

1

IMAGE PICKUP PART — 21

MOVING MECHANISM — 22

IMAGE COMBINING APPARATUS — 4

41 — WEIGHTING DIRECTION
DETERMINATION PART

42 — WEIGHTED PIXEL VALUE
CALCULATION PART

43 — COMBINED IMAGE
ACQUISITION PART

STORAGE PART — 44

PICKED-UP
IMAGE — 61

PICKED-UP
IMAGE — 61

PICKED-UP
IMAGE — 61

FIG. 2

FIG. 3

# FIG. 4

```
                    START
                      │
                      ▼
┌──────────────────────────────────────────────────┐
│  PREPARE A PLURALITY OF PICKED-UP IMAGES          │──S11
└──────────────────────────────────────────────────┘
                      │
                      ▼
┌──────────────────────────────────────────────────┐
│  DETERMINE WEIGHTING DIRECTION FOR EACH OVERLAPPING REGION │──S12
└──────────────────────────────────────────────────┘
                      │
                      ▼
┌──────────────────────────────────────────────────┐
│  SET WEIGHTING FACTOR ARRAY WITH RESPECT TO       │──S13
│  WEIGHTING DIRECTION IN EACH OVERLAPPING REGION   │
└──────────────────────────────────────────────────┘
                      │
                      ▼
┌──────────────────────────────────────────────────┐
│  OBTAIN WEIGHTED PIXEL VALUE OF OVERLAPPING PIXEL │──S14
│  IN EACH PICKED-UP IMAGE                          │
└──────────────────────────────────────────────────┘
                      │
                      ▼
┌──────────────────────────────────────────────────┐
│  ADD PIXEL VALUE OF EACH PIXEL IN PICKED-UP IMAGE │──S15
│  TO COMBINED IMAGE GENERATION REGION              │
└──────────────────────────────────────────────────┘
                      │
                      ▼
┌──────────────────────────────────────────────────┐
│  ADD SYNTHESIZED WEIGHTING FACTOR FOR EACH OVERLAPPING PIXEL │──S16
│  IN PICKED-UP IMAGE TO FACTOR ACCUMULATION REGION │
└──────────────────────────────────────────────────┘
                      │
                      ▼
┌──────────────────────────────────────────────────┐
│  ACQUIRE COMBINED IMAGE BY DIVIDING VALUE AT EACH POSITION │──S17
│  IN COMBINED IMAGE GENERATION REGION BY VALUE     │
│  AT THE SAME POSITION IN FACTOR ACCUMULATION REGION │
└──────────────────────────────────────────────────┘
                      │
                      ▼
                    END
```

FIG. 5

FIG. 6

FIG. 7

491

61a    611a    61

61

611b    61

Y

X

FIG. 8

491    492

COMBINED IMAGE GENERATION REGION

FACTOR ACCUMULATION REGION

FIG. 9

**EP 4 481 670 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59133665 A
- JP 62140172 A
- CN 115205118 A